# EUROPÄISCHE PATENTSCHRIFT

(11) **EP 3 073 631 B1**
(45) Veröffentlichungstag und Bekanntmachung des Hinweises auf die Patenterteilung: **15.05.2019**
(21) Anmeldenummer: 16159309.0
(22) Anmeldetag: 09.03.2016
(51) Int. Cl.: H02P 9/10

(54) **WINDENERGIEANLAGE MIT SUBSYNCHRON-SCHWINGUNGSUNTERDRÜCKUNG**
WIND TURBINE WITH SUB- SYNCHRONOUS OSCILLATION SUPPRESSION
ÉOLIENNE COMPRENANT UN DISPOSITIF DE SUPPRESSION DES VIBRATIONS SUBSYNCHRONES

(30) Priorität: 13.03.2015 DE 102015003170
(43) Veröffentlichungstag der Anmeldung: 28.09.2016
(73) Patentinhaber: Senvion GmbH, 22297 Hamburg (DE)
(72) Erfinder: Letas, Heinz-Hermann, 24796 Bovenau (DE); Cai, Lijun, 24106 Kiel (DE)
(74) Vertreter: Glawe, Delfs, Moll

(56) Entgegenhaltungen:
- LEON ANDRES E ET AL: "Sub-Synchronous Interaction Damping Control for DFIG Wind Turbines", IEEE TRANSACTIONS ON POWER SYSTEMS, IEEE SERVICE CENTER, PISCATAWAY, NJ, US, Bd. 30, Nr. 1, 1. Januar 2015 (2015-01-01) , Seiten 419-428, XP011568586, ISSN: 0885-8950, DOI: 10.1109/TPWRS.2014.2327197 [gefunden am 2014-12-18]
- LEON ANDRES ENRIQUE ET AL: "Subsynchronous resonance mitigation using variable-speed wind energy conversion systems", IET GENERATION, TRANSMISSION&DISTRIBUTION, IET, UK, Bd. 7, Nr. 5, 1. Mai 2013 (2013-05-01), Seiten 511-525, XP006045616, ISSN: 1751-8687, DOI: 10.1049/IET-GTD.2012.0357

## Beschreibung

Die Erfindung betrifft eine Windenergieanlage mit einem Windrotor, einem davon angetriebenen Generator mit Umrichter zur Erzeugung elektrischer Leistung, die über eine Anschlussleitung an ein Netz abgegeben wird, und einer Umrichtersteuerung, die einen Regelungskanal zur Steuerung der Leistungsabgabe an das Netz und zur Erregung des Generators aufweist.

Einen zunehmenden Anteil an der Stromversorgung übernehmen Windenergieanlagen der modernen Bauart. Sie weisen einen mit einem Umrichter gekoppelten Generator auf, wobei der Umrichter als ein sogenannter Vollumrichter ausgeführt sein kann oder als ein sogenannter Teilumrichter, insbesondere für doppelt gespeiste Asynchronmaschinen. Die Windenergieanlagen speisen in das elektrische Versorgungsnetz ein, welches eine gewisse Netzfrequenz aufweist (in den meisten Ländern sind dies 50 Hz, in einigen aber auch 60 Hz).

Es ist bekannt, dass es im Betrieb zu niederfrequenten Interaktionen zwischen Windenergieanlage einerseits und Netz andererseits kommen kann, und zwar insbesondere dann, wenn das Übertragungssystem reihenkompensiert ist. Es sind verschiedene Arten von subsynchronen Schwingungen bekannt, insbesondere subsynchrone Resonanzen (SSR) sowie subsynchrone Reglerinteraktionen (SSCI), und subsynchrone Torsionsinteraktionen (SSTI). Hierbei versteht man unter subsynchronen Resonanzen (SSR) eine Interaktion zwischen einem reihenkompensierten Übertragungssystem und einem Generator, insbesondere einer Windenergieanlage. Hingegen betreffen SSTI Interaktionen zwischen einem Generator und einer Leistungselektroniksteuerung, wie sie bspw. in hochgespannten Gleichstrom-Übertragungssystemen (HGÜ) anzutreffen ist. Bei SSCI geht es hingegen um Interaktionen zwischen einem reihenkompensierten Übertragungssystem und einer Leistungselektroniksteuereinrichtung, wie sie für einen doppelt gespeisten Asynchrongenerator vorgesehen ist. Gemeinsam ist diesen Interaktionen, dass hierbei Energie zwischen Netz und Windenergieanlage abwechselnd ausgetauscht wird. Hierdurch kann es zu Resonanzerscheinungen, Drehmomentschwingungen oder Ähnliches kommen, die schädlich für die Betriebssicherheit der Anlage sind und im ungünstigen Fall zu einem vorzeitigen Ausfall führen können.

Zur Bekämpfung der schädlichen Auswirkungen hat man versucht, in den Umrichterreglern der Windenergieanlagen eine größere Dämpfung vorzusehen. Durch diese Dämpfung soll erreicht werden, dass subsynchrone Schwingungen nicht zu stark werden. Je stärker die Dämpfung gemacht wird, desto höher kann die Grenzfrequenz des Auftretens kritischer subsynchroner Schwingungen hochgeschoben werden. Allerdings wirkt eine solche Maßnahme der Dämpfungserhöhung rein passiv und bringt als zusätzlichen Nachteil eine häufig unerwünschte Erhöhung der Trägheit der Umrichterregelung im Gesamten mit sich, also dass bspw. der Umrichter auf veränderte Leistungsanforderungen dann nur sehr verzögert reagiert. Dies ist für die Betriebseigenschaften ausgesprochen nachteilig.

Das IEEE-Papier "Sub-Synchronous Interaction Damping Control for DFIG Wind Turbines" offenbart eine Windenergieanlage mit jeweils den Merkmalen der Oberbegriffe der Ansprüche 1 und 11.

Der Erfindung liegt die Aufgabe zu Grunde, ein verbessertes System und eine verbesserte Methode zur Vermeidung oder Verringerung von subsynchronen Schwingungen anzugeben.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Windrotor, einem davon angetriebenen Generator mit Umrichter zur Erzeugung elektrischer Leistung, die über eine Anschlussleitung an ein Netz abgegeben wird, und einer Umrichtersteuerung, die einen ersten Regelungskanal zur Steuerung der Leistungsabgabe an das Netz und zur Erregung des Generators aufweist, ist erfindungsgemäß vorgesehen, dass ein von dem ersten Regelungskanal verschiedener zweiter Regelungskanal vorgesehen ist, der als ein feldorientierter Regler ausgeführt ist und dazu eine eigene Koordinatenwandelungseinheit aufweist, die subsynchron ausgelegt ist und dazu mit einem umlaufenden Koordinatensystem mit einer Frequenz versehen ist, welche betragsmäßig kleiner ist als die Netzfrequenz.

Die Erfindung beruht auf dem Gedanken, einen Zusatzregler vorzusehen, der zusätzlich zu der ohnehin an der Umrichtersteuerung vorhandenen Leistungsregelung angeordnet ist. Dieser Zusatzregler ist als ein feldorientierter Regler ausgeführt, der zur Regelung in der d,q-Ebene ausgebildet ist. Er ist hierbei so ausgebildet, dass er einen eigenen (von dem ohnehin vorhandenen Leistungsregler verschiedenen) umlaufenden Feldvektor aufweist. Zu diesem Zweck weist er eine eigene Koordinatenwandelungseinheit auf, die einen umlaufenden Feldvektor implementiert hat, welche mit einer geringeren Frequenz als die Netzfrequenz umläuft. Damit ist der Zusatzregler speziell ausgebildet für den subsynchronen Bereich.

Die Erfindung basiert darauf, dass mit dem Zusatzregler eine spezielle, eigene Regelung in einem vollkommen anderen Frequenzbereich geschaffen wird, als bei dem in der Netzfrequenzebene arbeitenden Leistungsregler. Dazu werden die Ausgangssignale der beiden Regelungen miteinander verknüpft, so dass sowohl der ohnehin vorhandene Leistungsregler wie auch der erfindungsgemäße Zusatzregler kooperativ auf den eigentlichen Umrichter einwirken.

Es wird durch den Zusatzregler somit eine Regelung in einer zusätzlichen Frequenzebene geschaffen, die sich unterscheidet von derjenigen des ohnehin vorhandenen Leistungsreglers. Diese zusätzliche Frequenzebene liegt unter der Netzfrequenz. Damit kann der erfindungsgemäße Zusatzregler speziell abgestimmt sein auf die Bekämpfung subsynchroner Interaktionen. Er kann der Entstehung solcher subsynchronen Schwingungen aktiv entgegenwirken, ohne dass dadurch - wie im Stand der Technik - der herkömmliche Regler träge gemacht wird. Der herkömmliche Regler bleibt vollkommen unangetastet und wird erfindungsgemäß nicht mit zusätzlichen Dämpfungsgliedern belastet.

Es kann so eine wesentlich verbesserte Bekämpfung subsynchroner Schwingungen über einen weiten, subsynchronen Frequenzbereich erreicht werden. Durch den eigenen Regelungskanal ist die Zusatzregelung robust in Bezug auf unterschiedliche Betriebsbedingungen, da sie sich mit den verschiedenen Leistungsanforderungen (wie sie bspw. vom Netzbetreiber gestellt werden) überhaupt nicht zu befassen braucht, da dies Sache des ohnehin vorhandenen Leistungsreglers ist (der aber wiederum nicht zur Bekämpfung der subsynchronen Schwingungen herangezogen wird).

Insgesamt ergibt sich durch den erfindungsgemäß vorgesehenen zweiten Regelungskanal eine deutlich verbesserte Bekämpfung der subsynchronen Schwingungen auf aktive Weise mittels einer eigenen Regelung, und zwar ohne negative Auswirkungen auf die Trägheit der gesamten Umrichterregelung. Ein weiterer Vorteil der Erfindung ist, dass die beträchtlichen funktionalen Vorteile ganz ohne oder nur mit ausgesprochen geringem Hardwareaufwand erreicht werden können. Die Erfindung eignet sich somit auch zur Nachrüstung bestehender Anlagen.

Weitere Vorteile der Erfindung sind eine wirksame Bekämpfung von subsynchronen Schwingungen, insbesondere den subsynchronen Resonanzen (SSR) und den subsynchronen Reglerinteraktionen (SSCI), und zwar auf sehr effiziente Weise. Die hierzu erforderlichen Einrichtungen können in der Regel mit der vorhandenen Hardware des Umrichters realisiert werden, so dass insoweit kein Zusatzaufwand anfällt. Ferner ist durch die mit dem zweiten Regelungskanal bewirkte aktive Regelung eine größere Robustheit gegenüber Frequenzverschiebungen von subsynchronen Schwingungen erreicht, als sie bei den klassischerweise eingesetzten Verfahren mittels passiver Dämpfung möglich war.

Zweckmäßigerweise umfassen die Koordinatenwandelungseinheiten des zweiten Regelungskanals einen Koordinatenwandler, in dem Messsignale für Strom und Spannung im Netz angelegt sind, einen Regelkern sowie einen Koordinatenrückumwandler, der das Ausgangssignal bereitstellt. Hiermit ergibt sich ein strukturell und funktional günstiger Aufbau des Regelungskanals, der sich gut mit dem für die Leistungssteuerung des Umrichters ohnehin vorgesehenen ersten Regelungskanal verträgt. Der Gefahr von Interaktionen zwischen den beiden Regelungskanälen, die ggf. zum Auftreten von Reglerschwingungen mit entsprechenden Belastungen führen könnten, wird damit wirksam entgegengewirkt. In der Regel ist der erste Regelungskanal ebenfalls als eine feldorientierte Regelung ausgeführt, mit einem netzsynchronen umlaufenden Koordinatensystem. Unbedingt erforderlich für die Erfindung ist dies aber nicht. Der zweite Regelungskanal arbeitet insoweit dank eigener Koordinatenwandelungseinheiten autark.

Vorzugsweise ist der zweite Regelungskanal aufgeschaltet am Ausgang des ersten Regelungskanals, und zwar insbesondere unmittelbar vor einer Modulationseinheit, welche zur Ansteuerung von Stromventilen des Umrichters ausgebildet ist. Die Modulationseinheit ist vorzugsweise als eine Pulsweitenmodulationseinheit (PWM-Einheit) ausgeführt. Damit ergibt sich ein direkter Zugriff des zweiten Regelungskanals, analog zu dem Zugriff des ersten Regelungskanals, auf die für die Funktion der Stromventile entscheidende Modulationseinheit. Zur Aufschaltung sind zweckmäßigerweise Summationsglieder vorgesehen.

Mit Vorteil weist der zweite Regelungskanal eine eigene Nachlaufsynchronisationseinheit (PLL) auf, die für einen Frequenzbereich tiefer als die Netzfrequenz ausgebildet ist. Ein zweckmäßiger Frequenzbereich liegt im Bereich zwischen 10% und 80% der Netzfrequenz. In diesem Bereich liegen üblicherweise die subsynchronen Schwingungen, so dass durch die Abstimmung der Nachlaufsynchronisationseinheit auf diesem Frequenzbereich eine optimale Anpassung des zweiten Regelungskanals einerseits und Entkopplung vom ersten Regelungskanal andererseits erreicht wird. Zweckmäßigerweise gibt die eigene Nachlaufsynchronisationseinheit einen subsynchronen Feldvektor aus, dessen Frequenz kleiner ist als die Frequenz im Netz, und der als Eingangszeiger an den Koordinatenrückwandler angelegt ist. Damit kann eine genaue und betriebssichere Koordinatenrückumwandelung erreicht werden, so dass sich die Ausgangssignale des zweiten Regelungskanals harmonisch in das Ausgangssignal des ohnehin vorhandenen ersten Regelungskanals einfügen.

Zweckmäßigerweise ist der zweite Regelungskanal so ausgebildet, dass dessen Regelkern vorzugsweise Lead/Lag-Glieder umfasst. Damit kann auf so einfache wie auch zweckmäßige Weise eine effiziente Regelung zur Verminderung der subsynchronen Schwingungen erreicht werden. Bevorzugt ist, wenn den Lead/Lag-Gliedern ein Tiefpass vorgeschaltet ist.

Der Umrichter weist vorzugsweise einen generatorseitigen Wechselrichter sowie einen netzseitigen Wechselrichter auf, wobei nur der netzseitige Wechselrichter mit dem zweiten Regelungskanal versehen ist. Besonders zweckmäßig ist dies bei solchen Ausführungsformen, bei welchen der Generator als ein Synchrongenerator ausgeführt ist. Damit ergibt sich ein maximales Ergebnis bei geringstem Aufwand. - Es kann aber auch vorgesehen sein, dass der Generator als ein doppelt gespeister Asynchrongenerator ausgeführt ist, wobei dann zweckmäßigerweise sowohl der generatorseitige Wechselrichter wie auch der netzseitige Wechselrichter je einen eigenen zweiten Regelungskanal aufweisen. Damit kann auch mit einem verhältnismäßig kleinen Umrichter ein bedeutender Beitrag zur Unterdrückung subsynchroner Schwingungen erzielt werden.

Die Erfindung erstreckt sich ferner auf ein entsprechendes Verfahren zum Betreiben einer Windenergieanlage, wie vorstehend beschrieben, gekennzeichnet durch die Schritte: Kompensieren von subsynchronen Schwingungen mittels eines zweiten Regelungskanals, der eine feldorientierte Regelung ausführt, Ausführen einer eigenen Koordinatentransformation im zweiten Regelungskanal für den subsynchronen Frequenzbereich, Ausgeben der Signale mittels eines Regelkerns, Ausführen einer eigenen Koordinatenrücktransformation am Ausgang des Regelkerns, und ein Verknüpfen dieser Ausgangssignale mit Ausgangssignalen des ersten Regelungskanals.

Zur näheren Erläuterung wird auf vorstehende Beschreibung verwiesen.

Die Erfindung wird nachfolgend unter Bezugnahme auf die beigefügte Zeichnung anhand eines vorteilhaften Ausführungsbeispiels erläutert. Es zeigen:
- Fig. 1:: eine Blockdarstellung einer Windenergieanlage;
- Fig. 2:: eine Darstellung einer reihenkompensierten Übertragungsleitung mit konzentrierten Elementen;
- Fig. 3:: ein Blockschaltbild einer Umrichtersteuerung mit erstem und zweitem Regelungskanal;
- Fig. 4:: eine Detaildarstellung zu einem Regelkern eines zweiten Regelungskanals;
- Fig. 5:: ein Anschaltdiagramm darstellend eine Verbindung des zweiten Regelungskanals mit einem netzseitigen Wechselrichter des Umrichters;
- Fig. 6:: ein Anschaltdiagramm eines zweiten Regelungskanals an einen maschinenseitigen Wechselrichter des Umrichters; und
- Fig. 7:: ein Diagramm mit Frequenzkennlinien.

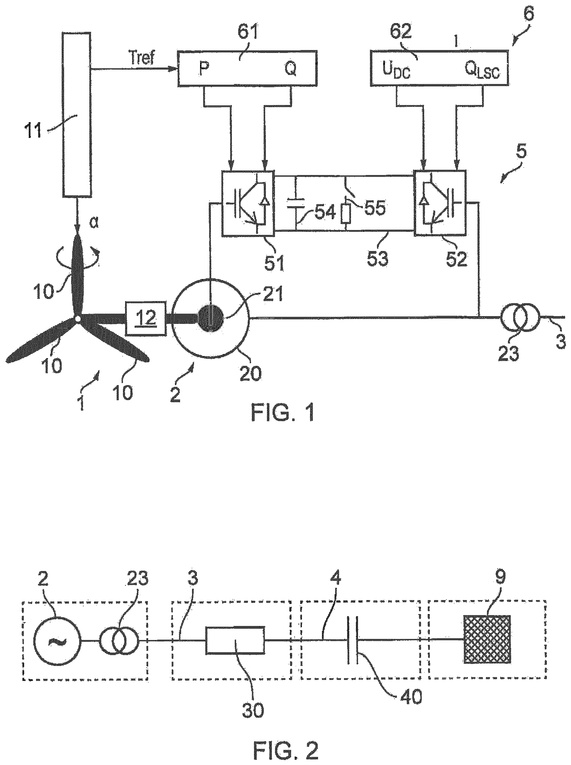

Eine Windenergieanlage zur Anwendung der Erfindung ist in Fig. 1 schematisch dargestellt. Sie umfasst einen Windrotor 1 mit mehreren pitchverstellbaren Rotorblättern 10. Er treibt über ein Getriebe 12 einen Generator 2 an, der im dargestellten Ausführungsbeispiel als doppelt gespeiste Asynchronmaschine mit einem Stator 20 und einem Rotor 21 ausgeführt ist. Der Stator 20 ist direkt an einen Anlagentransformator 23 angeschlossen, von dem eine Übertragungsleitung 3 zu einem Versorgungsnetz 9 führt.

An den Rotor 21 des Generators 2 ist ein Umrichter 5 angeschlossen. Der Umrichter 5 umfasst einen maschinenseitigen Wechselrichter 51, der mit dem Rotor 21 verbunden ist, sowie einen netzseitigen Wechselrichter 52, der an den Anlagentransformator 23 angeschlossen ist. Die beiden Wechselrichter 51, 52 sind miteinander verbunden über einen Gleichspannungszwischenkreis 53. Er umfasst als ein Energiespeicher einen Kondensator 54. Ferner ist ein Chopper 55 am Zwischenkreis 53 vorgesehen.

Der Betrieb des Umrichters 5 wird gesteuert von einer Umrichtersteuerung 6. Sie umfasst zwei Einheiten, eine erste Einheit 61 für den maschinenseitigen Wechselrichter 51 und eine zweite Einheit 62 für den netzseitigen Wechselrichter 52. Führungssignale für die Umrichtersteuerung 6 sind angelegt von einer Betriebssteuerung 11 der Windenergieanlage. Sie gibt ein Drehmomentsignal T_{ref} an die Umrichtersteuerung 6 aus. Sie umfasst ferner einen Pitchregler, welcher ein Stellsignal für einen Pitchwinkel α ausgibt zur Einstellung des Pitchwinkels der Rotorblätter 10.

Der Anschluss der Windenergieanlage an ein Netz über eine Anschlussleitung 3 ist in Fig. 2 näher dargestellt. Die verschiedenen zum Anschluss dienenden Komponenten sind in Funktionsblöcke unterteilt. Ein erster Funktionsblock umfasst den Generator 2 mit dem Anlagentransformator 23 der Windenergieanlage selbst. Dieser stellt den Anfang der Übertragungsleitung bzw. bei komplexeren Systemen des Übertragungssystems dar. Am anderen Ende ist das Leistung aufnehmende Versorgungsnetz 9 angeordnet in einem eigenen Funktionsblock. Dazwischen liegen zwei Funktionsblöcke, wobei der eine näher zur Windenergieanlage gelegene die eigentliche Übertragungsleitung 3 abbildet. Elektrisch ist er repräsentiert durch eine Impedanz 30, welche einen beträchtlichen induktiven Windanteil aufweist. Um dies auszugleichen, ist der andere mittlere Funktionsblock vorgesehen, welcher eine Reihenkompensation 4 umfasst. Diese ist dargestellt durch ein konzentriertes Element, welches eine Kapazität 40 bildet. Zusammengefasst stellt sich der Anschluss der Windenergieanlage mit ihrem Generator 2 und dem Anlagentransformator 23 an das Netz 9 also so dar, dass zur Kompensation der Induktivität der Anschlussleitung eine Kapazität 40 zusätzlich vorgesehen ist, welche in Reihenschaltung angeordnet ist. Dies wird als reihenkompensiertes Übertragungssystem bezeichnet. Es ist generell beim Betrieb von Windenergieanlagen anfällig für subsynchrone Interaktionen (SSI), wobei es zu Störung oder Beeinträchtigung der Betriebssicherheit kommen kann.

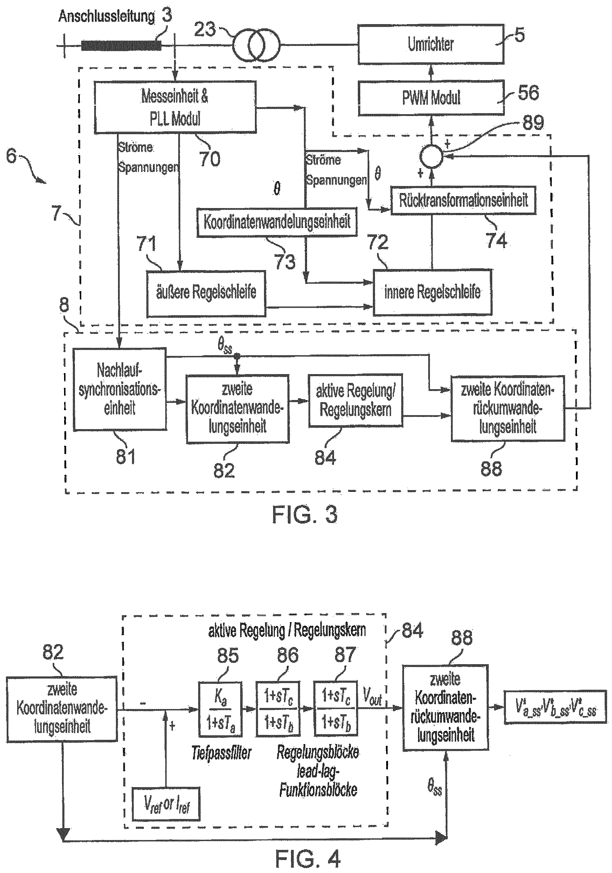

Zur Verringerung negativer Effekte der subsynchronen Interaktion ist die Umrichtersteuerung 6 erfindungsgemäß ausgeführt, wie nachfolgend erläutert. Es wird Bezug genommen auf Fig. 3. Sie zeigt die Umrichtersteuerung 6, welche auf den Umrichter 5 einwirkt über eine Modulationseinheit, die als ein Pulsweitenmodul (PWM-Modul) 56 ausgeführt ist. Der von diesem PWM-Modul 56 angesteuerte Umrichter gibt Leistung über den Anlagentransformator 23 und die Anschlussleitung 3 ab. Die Umrichtersteuerung 6 umfasst einen ersten Regelungskanal 7. Dieser ist zur Steuerung der eigentlichen Leistungsabgabe der Windenergieanlage an das Netz 9 ausgebildet und zur Steuerung der Erregung des Generators 2. Ferner ist erfindungsgemäß ein zweiter Regelungskanal 8 vorgesehen, der dem ersten Regelungskanal 7 parallel geschaltet ist. Die Ausgangssignale des ersten Regelungskanals 7 und die des zweiten Regelungskanals 8 werden über ein Summationsglied 89 miteinander verknüpft und so gemeinsam an einen Steuereingang des PWM-Moduls 56 angelegt.

Der erste Regelungskanal 7 ist in an sich bekannter Weise ausgeführt mit einer äußeren Regelschleife 71 und einer inneren Regelschleife 72. Vorgeschaltet ist eine Messeinheit mit einem PLL-Modul 70. Das PLL-Modul generiert einen Winkelwert für einen umlaufenden Feldvektor, der synchron zur Netzfrequenz umläuft. Dieser synchron zur Netzfrequenz umlaufende Winkel des Feldvektors wird mit dem Buchstaben θ bezeichnet. Die innere Regelschleife 72 ist als eine feldorientierte Regelung ausgeführt, was bedeutet, dass sie auf einem mitdrehenden Koordinatensystem basiert. Hierzu ist an einem Eingang eine Koordinatenwandelungseinheit 73 angeschlossen, welche eine Umwandelung der gemessenen Größen in ein synchron zum Netzvektor umlaufendes Koordinatensystem vornimmt. Das von ihr abgegebene Ausgangssignal wird einer Rücktransformationseinheit 74 zugeführt, welche eine Rücktransformation aus dem synchron zur Netzfrequenz mitdrehenden Koordinatensystem in das zur Ansteuerung verwendete, übliche Dreiphasensystem beim Drehstromnetz rückwandelt und an einen Eingang des Summationsglieds 89 anlegt.

Der erfindungsgemäß vorgesehene zweite Regelungskanal weist einen eigenen feldorientierten Regelkern 84 auf, welcher über eine zweite Koordinatenwandelungseinheit 82 und über eine zweite Koordinatenrückwandelungseinheit 88 verfügt. Die Besonderheit der zweiten Koordinatenwandelungseinheit 82 und zweiten Koordinatenrückwandelungseinheit 88 liegt darin, in ein eigenes Koordinatensystem zu wandeln, das verschieden ist von dem netzsynchron umlaufenden Koordinatensystem des ersten Regelungskanals 7. Die Frequenz- und Phasenlage des Koordinatensystems des zweiten Regelungskanals 8 sind also verschieden von derjenigen des ersten Regelungskanals 7. Es ergibt sich somit eine vollkommen unabhängige Regelung des zweiten Regelungskanals 8. Sie kann frequenzmäßig genau abgestimmt sein auf subsynchrone Störungen, wodurch sie sich fundamental von dem ersten Regelungskanal 7 unterscheidet, welcher im Gegensatz dazu ausgelegt ist für einen Betrieb synchron zur Netzfrequenz.

Der zweite Regelungskanal 8 umfasst weiter eine Nachlaufsynchronisationseinheit 81, welche die erforderlichen Winkelwerte zur Ermittlung des subsynchron umlaufenden Koordinatensystems ermittelt. Der für den entsprechenden subsynchron umlaufenden Feldvektor stehende Winkelwert wird als θ_{SS} bezeichnet, und an die Koordinatenwandelungseinheit 82 und die Koordinatenrückwandelungseinheit 88 angelegt. Den eigentlichen Regelkern 84 des zweiten Regelungskanals 8 bildet ein eigenständiger Regler. Er umfasst in dem dargestellten Ausführungsbeispiel zwei Regelungsblöcke 86, 87, die als Lead-Lag-Funktionsglieder ausgeführt sind. Sie ermöglichen eine schnelle und aktive Regelung zur Bekämpfung von subsynchronen Schwingungen. Zur Eliminierung störender höherer Frequenzanteile, insbesondere Oberschwingungen, ist ein Tiefpassfilter 85 vorgeschaltet. Am Ausgang des Regelkerns 84 stehen somit Signale in einem subsynchron mitdrehenden Koordinatensystem, welche nach Rücktransformation in das drehende dreiphasige Koordinatensystem durch die Koordinatenrückwandelungseinheit 88 als Stellsignale an den Umrichter 5 angelegt sind. Dies geschieht mittels des Summationsglieds 89, welches diese Signale auf diejenigen des ersten Regelungskanals 7 aufaddiert und den so gewonnenen Summenwert gemeinsam an einen Steuereingang des PWM-Moduls 56 anlegt.

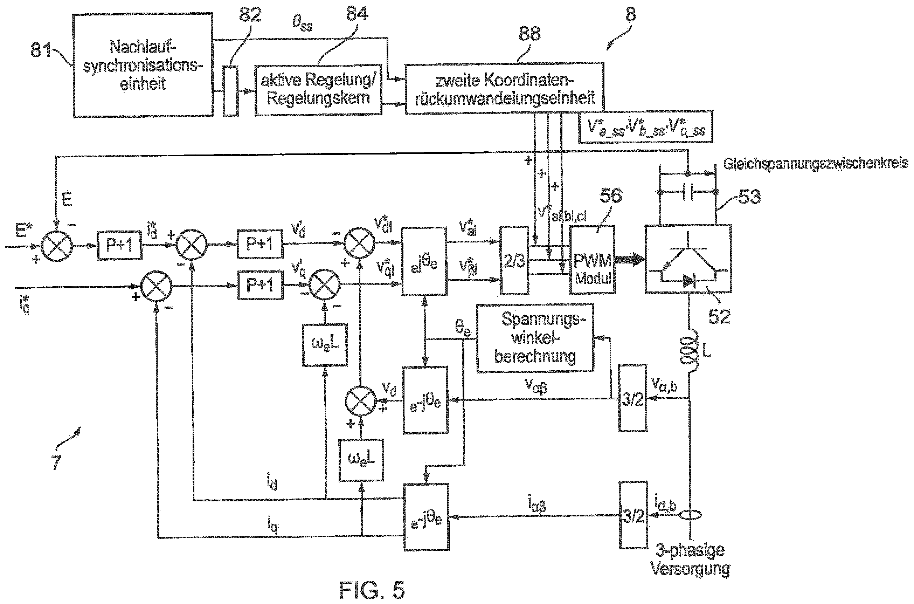

In der Detaildarstellung in Fig.5 ist das Einwirken des zweiten Regelungskanals auf den netzseitigen Wechselrichter 52 des Umrichters 5 dargestellt. Der zur herkömmlichen Regelung verwendete erste Regelungskanal 7 ist in der Mitte und im unteren Bildbereich dargestellt. Der erfindungsgemäß hinzugefügte zweite Regelungskanal 8 mit seiner eigenen, zweiten Koordinatenwandelungseinheit 82 und eigener, zweiten Koordinatenrückwandelungseinheit 88 ist im oberen Bildbereich dargestellt. Deutlich ist zu erkennen, dass erst die mit dem eigens generierten subsynchronen Feldvektor rückgewandelten Koordinaten (durch die Koordinatenrückwandelungseinheit 88) dann im dreiphasigen System über eine Summationsstelle (nicht dargestellt) gemeinsam mit den Ausgangssignalen des ersten Regelungskanals 7 auf die Pulsweitensteuereinheit 56 aufgeschaltet sind. Dieses Bild visualisiert deutlich die unabhängige Ausregelung subsynchroner Schwingungen durch den eigenen, zweiten Regelungskanal mittels einer eigenen aktiven Regelung. Dieser arbeitet in einem ganz anderen Phasen- und Frequenzbereich als der erste Regelungskanal dank der eigenen, zweiten Koordinatenumwandelung mit dem subsynchronen (d. h. tiefer als die Netzfrequenz) umlaufenden Feldvektor mit dem Phasenwinkel θ_{SS}. Falls ein Synchrongenerator vorgesehen ist als Generator 2, so genügt zur Ausführung der Erfindung das Vorsehen des zweiten Regelungskanals 8 an dem netzseitigen Wechselrichter 51, wie in Fig. 5 dargestellt.

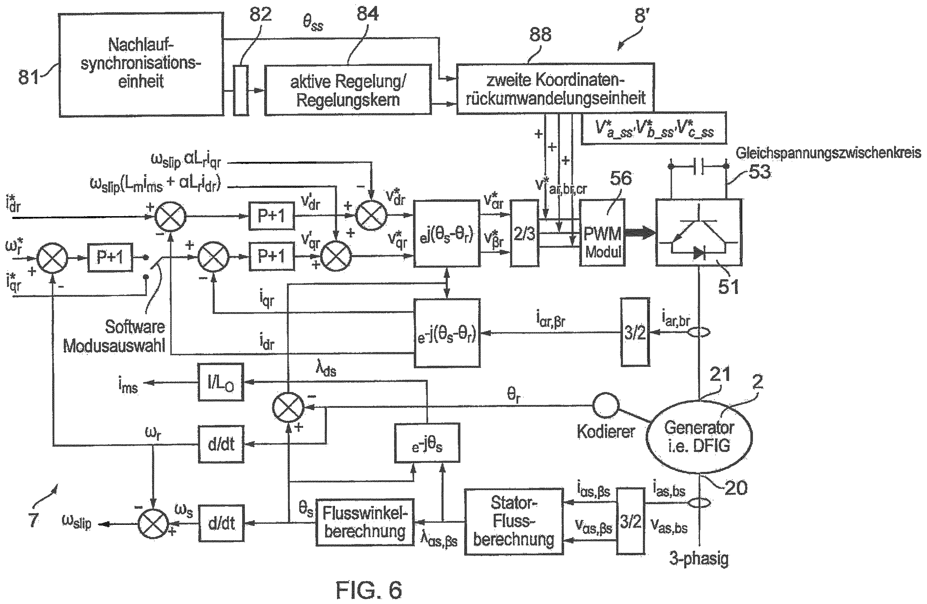

Falls der Generator 2 als eine doppelt gespeiste Asynchronmaschine ausgeführt ist, so kann alternativ oder zusätzlich ein zweiter Regelungskanal 8' am maschinenseitigen Wechselrichter 51 vorgesehen sein. Dies ist in Fig. 6 detailliert dargestellt. Wiederum ist im mittleren unteren Bildbereich der herkömmliche erste Regelungskanal 7 dargestellt, hier für den maschinenseitigen Wechselrichter 51. Erfindungsgemäß hinzugefügt ist der zweite Regelungskanal 8', welcher eine eigene aktive Regelung 84 aufweist, die in einer von dem ersten Regelungskanal 7 abweichenden Frequenzdomäne arbeitet. Dazu umfasst der zweite Regelungskanal 8' neben seinem Regelkern 84 eine eigene Koordinatenwandelungseinheit 82 und Koordinatenrückwandelungseinheit 88, welche von einem eigens bestimmten subsynchron umlaufenden Feldvektor mit dem Winkel θ_{SS} angesteuert sind.

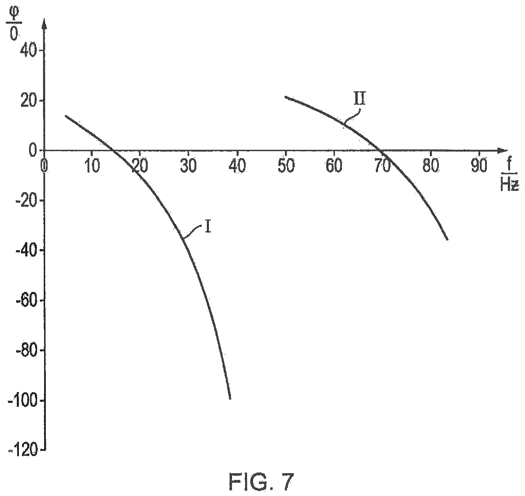

Die durch die aktive Regelung in einem eigenen, parallelen Regelungskanal erreichten Wirkungen bei der Bekämpfung der negativen Auswirkung subsynchroner Interaktionen (SSI) sind beträchtlich. Beispielhaft ist in Fig. 7 die Verschiebung der Kennlinien dargestellt, wobei die mit I bezeichnete Kennlinie das Verhalten ohne und die mit II bezeichnete Kennlinie das Verhalten mit der erfindungsgemäß vorgesehenen Anordnung des zweiten Regelungskanals 8 repräsentieren. Man erkennt deutlich eine beträchtliche Erhöhung des kritischen Frequenzbereichs von 15 auf gut 25 Hz. Damit kann eine deutliche Steigerung der Betriebssicherheit erzielt werden.

## Patentansprüche

1. Windenergieanlage mit einem Windrotor (1), einem davon angetriebenen Generator (2) mit Umrichter (5) zur Erzeugung elektrischer Leistung, die über eine Anschlussleitung (3) an ein Netz (9) abgegeben wird, einer Umrichtersteuerung (6), die einen ersten Regelungskanal (7) zur Steuerung der Leistungsabgabe an das Netz (9) und zur Erregung des Generators (2) aufweist, und einem von dem ersten Regelungskanal (7) verschiedenen zweiten Regelungskanal (8),
**dadurch gekennzeichnet, dass**
der zweite Regelungskanal (8) als ein feldorientierter Regler ausgeführt ist und dazu eine eigene Koordinatenwandelungseinheit (82) aufweist, die subsynchron ausgelegt ist und dazu mit einem umlaufenden Koordinatensystem (θ_{SS}) mit einer Frequenz versehen ist, welche betragsmäßig kleiner ist als die Netzfrequenz (θ).

2. Windenergieanlage nach Anspruch 1,
**dadurch gekennzeichnet, dass**
der erste Regelungskanal (7) als eine feldorientierte Regelung mit einem netzsynchron umlaufenden Koordinatensystem ausgeführt ist.

3. Windenergieanlage nach Anspruch 1 oder 2,
**dadurch gekennzeichnet, dass**
der zweite Regelungskanal (8) aufgeschaltet ist am Ausgang des ersten Regelungskanals (7), vorzugsweise vor einer Modulationseinheit (56) zur Ansteuerung von Stromventilen des Umrichters (5).

4. Windenergieanlage nach Anspruch 3,
**dadurch gekennzeichnet, dass**
ein Summationsglied (89) zur Aufschaltung vorgesehen ist.

5. Windenergieanlage nach einem der vorangehenden Ansprüche,
**dadurch gekennzeichnet, dass**
der zweite Regelungskanal (8) eine eigene Nachlaufsynchronisationseinheit (PLL) (81) aufweist, die für einen Frequenzbereich tiefer als die Netzfrequenz ausgebildet ist, vorzugsweise im Bereich zwischen 10% bis 80% der Netzfrequenz.

6. Windenergieanlage nach Anspruch 5,
**dadurch gekennzeichnet, dass**
die eigene Nachlaufsynchronisationseinheit (81) einen subsynchronen Feldvektor (θ_{SS}) generiert, dessen Frequenz kleiner ist als die Netzfrequenz, und der als Eingangsgröße für eine Koordinatenwandelungseinheit und eine Koordinatenrückumwandelungseinheit (82, 88) angelegt ist.

7. Windenergieanlage nach einem der vorangehenden Ansprüche,
**dadurch gekennzeichnet, dass**
der zweite Regelungskanal (8) einen Regelungskern (84) aufweist, der vorzugsweise Lead-Lag-Glieder (86, 87) umfasst.

8. Windenergieanlage nach Anspruch 7,
**dadurch gekennzeichnet, dass**
der Regelkern (84) einen vorgeschalteten Tiefpassfilter (85) umfasst.

9. Windenergieanlage nach einem der vorangehenden Ansprüche,
**dadurch gekennzeichnet, dass**
der Umrichter (5) einen generatorseitigen Wechselrichter (51) und einen netzseitigen Wechselrichter (52) umfasst, wobei nur der netzseitige Wechselrichter (52) einen zweiten Regelungskanal (8) aufweist, und der Generator (2) vorzugsweise als ein Synchrongenerator ausgeführt ist.

10. Windenergieanlage nach einem der Ansprüche 1 bis 8,
**dadurch gekennzeichnet, dass**
der Generator ein doppelt gespeister Asynchrongenerator ist und sowohl der generatorseitige Wechselrichter (51) wie auch der netzseitige Wechselrichter (52) je einen zweiten Regelungskanal (8, 8') aufweisen.

11. Verfahren zum Betreiben einer Windenergieanlage mit einem Windrotor (1), einem davon angetriebenen Generator (2) mit Umrichter (5) zur Erzeugung elektrischer Leistung, die über eine Anschlussleitung (3) an ein Netz (9) abgegeben wird, und einer Umrichtersteuerung (6), die eine Regelung der Leistungsabgabe des Generators (2) über einen ersten Regelungskanal (7) vornimmt,
**gekennzeichnet, durch**
Kompensieren von subsynchronen Schwingungen mittels eines zweiten Regelungskanals (8), der als eine feldorientierte Regelung fungiert durch
- Ausführen einer eigenen Koordinatentransformation (82) für einen subsynchronen Frequenzbereich,
- Ausregelung der Schwingungen mittels eines Regelkerns (84),
- Ausführen einer eigenen Koordinatenrücktransformation (88) zur Erzeugung von Stellsignalen, und
- Verknüpfen (89) dieser Stellsignale mit Ausgangssignalen des ersten Regelungskanals (7) zur gemeinsamen Ansteuerung des Umrichters (5).

12. Verfahren nach Anspruch 11,
**dadurch gekennzeichnet, dass**
eine Windenergieanlage nach einem der Ansprüche 1 bis 10 verwendet wird.

## Claims

1. Wind turbine having a wind rotor (1), a generator (2) that is driven thereby and has a converter (5) for generating electric power that is delivered to a grid (9) by way of a connection line (3), a converter controller (6) that has a first control channel (7) for controlling the delivery of power to the grid (9) and for exciting the generator (2), and a second control channel (8), different from the first control channel (7),
**characterized in that**
the second control channel (8) is configured as a field-oriented controller and, to this end, has a dedicated coordinate transformation unit (82) that is configured so as to be sub-synchronous and, to this end, is provided with a revolving coordinate system (θ_{SS}) having a frequency that is lower than the grid frequency (θ) in absolute terms.

2. Wind turbine according to Claim 1, **characterized in that** the first control channel (7) is configured as a field-oriented controller having a coordinate system that revolves synchronously with the grid.

3. Wind turbine according to Claim 1 or 2, **characterized in that** the second control channel (8) is connected at the output of the first control channel (7), preferably upstream of a modulation unit (56) for driving current valves of the converter (5).

4. Wind turbine according to Claim 3, **characterized in that** a summation element (89) is provided for the connection.

5. Wind turbine according to one of the preceding claims, **characterized in that** the second control channel (8) has a dedicated phase-locked loop (PLL) (81) that is designed for a frequency range lower than the grid frequency, preferably in the range between 10% and 80% of the grid frequency.

6. Wind turbine according to Claim 5, **characterized in that** the dedicated phase-locked loop (81) generates a sub- synchronous field vector (θ_{SS}) whose frequency is lower than the grid frequency and that is applied as input variable for a coordinate transformation unit and a coordinate retransformation unit (82, 88).

7. Wind turbine according to one of the preceding claims, **characterized in that** the second control channel (8) has a control core (84) that preferably comprises lead-lag elements (86, 87).

8. Wind turbine according to Claim 7, **characterized in that** the control core (84) comprises a low-pass filter (85) connected upstream thereof.

9. Wind turbine according to one of the preceding claims, **characterized in that** the converter (5) comprises an inverter (51) on the generator side and an inverter (52) on the grid side, wherein only the inverter (52) on the grid side has a second control channel (8), and the generator (2) is preferably configured as a synchronous generator.

10. Wind turbine according to one of Claims 1 to 8, **characterized in that** the generator is a doubly fed asynchronous generator and both the inverter (51) on the generator side and the inverter (52) on the grid side have a respective second control channel (8, 8').

11. Method for operating a wind turbine having a wind rotor (1), a generator (2) that is driven thereby and has a converter (5) for generating electric power that is delivered to a grid (9) by way of a connection line (3), and a converter controller (6) that assumes control of the delivery of power by the generator (2) by way of a first control channel (7),
**characterized by**
compensating sub-synchronous oscillations by way of a second control channel (8) that functions as a field-oriented controller, by
- performing a dedicated coordinate transformation (82) for a sub-synchronous frequency range,
- adjusting the oscillations by way of a control core (84),
- performing a dedicated coordinate retransformation (88) for the purpose of generating drive signals, and
- linking (89) these drive signals with output signals from the first control channel (7) so as to jointly drive the converter (5).

12. Method according to Claim 11, **characterized in that** a wind turbine according to one of Claims 1 to 10 is used.

## Revendications

1. Éolienne comprenant un rotor éolien (1), un générateur (2) entraîné par ce dernier et muni d'un convertisseur (5) destiné à générer de l'énergie électrique qui est délivrée à un réseau (9) par l'intermédiaire d'une ligne de raccordement (3), une unité de commande de convertisseur (6) qui comporte un premier canal de régulation (7) destiné à commander la puissance délivrée au réseau (9) et à attaquer le générateur (2), et un second canal de régulation (8) qui est différent du premier canal de régulation (7),
**caractérisée en ce que**
le second canal de régulation (8) est réalisé sous la forme d'un régulateur orienté champ et comporte à cet effet sa propre unité de conversion de coordonnées (82), qui est conçue pour être sous-synchrone et est dotée à cet effet d'un système de coordonnées tournant (θ_{SS}) dont la fréquence présente une valeur inférieure à la fréquence du réseau (θ).

2. Éolienne selon la revendication 1, **caractérisée en ce que** le premier canal de régulation (7) est réalisé sous la forme d'un système de régulation orienté champ comportant un système de coordonnées tournant synchrone du réseau.

3. Éolienne selon la revendication 1 ou 2, **caractérisée en ce que** le second canal de régulation (8) est raccordé à la sortie du premier canal de régulation (7), de préférence en amont d'une unité de modulation (56) destinée à commander des limiteurs de courant du convertisseur (5).

4. Éolienne selon la revendication 3, **caractérisée en ce qu'**un élément de sommation (89) est prévu pour le raccordement.

5. Éolienne selon l'une des revendications précédentes, **caractérisée en ce que** le second canal de régulation (8) comporte sa propre unité de synchronisation de poursuite (PLL) (81), qui est conçue pour une plage de fréquences inférieure à la fréquence du réseau, de préférence dans la plage comprise entre 10% et 80% de la fréquence du réseau.

6. Éolienne selon la revendication 5, **caractérisée en ce que** ladite unité de synchronisation de poursuite propre (81) génère un vecteur de champ sous-synchrone (θ_{SS}) dont la fréquence est inférieure à la fréquence du réseau et qui est appliqué en tant que grandeur d'entrée d'une unité de conversion de coordonnées et d'une unité de conversion inverse de coordonnées (82, 88).

7. Éolienne selon l'une des revendications précédentes, **caractérisée en ce que** le second canal de régulation (8) comporte un noyau de régulation (84) qui comprend de préférence des éléments d'avance-retard (86, 87).

8. Éolienne selon la revendication 7, **caractérisée en ce que** le noyau de régulation (84) comprend un filtre passe-bas connecté en amont (85).

9. Éolienne selon l'une des revendications précédentes, **caractérisée en ce que** le convertisseur (5) comprend un onduleur côté générateur (51) et un onduleur côté réseau (52), seul l'onduleur côté réseau (52) comportant un second canal de régulation (8) et le générateur (2) est de préférence réalisé sous la forme d'un générateur synchrone.

10. Éolienne selon l'une des revendications 1 à 8, **caractérisée en ce que** le générateur est un générateur asynchrone à double alimentation et **en ce que** l'onduleur côté générateur (51) et l'onduleur côté réseau (52) comportent chacun un second canal de régulation (8, 8').

11. Procédé pour faire fonctionner une éolienne comportant un rotor éolien (1), un générateur (2) entraîné par ce dernier et muni d'un convertisseur (5) destiné à générer de l'énergie électrique qui est délivrée à un réseau (9) par l'intermédiaire d'une ligne de raccordement (3), et une unité de commande de convertisseur (6) qui effectue une régulation de la puissance de sortie du générateur (2) par l'intermédiaire d'un premier canal de régulation (7),
**caractérisé par**
le fait de compenser des oscillations sous-synchrones au moyen d'un second canal de régulation (8) qui fait office de régulation orientée champ par les étapes consistant à
- effectuer une transformation de coordonnées propre (82) pour une plage de fréquences sous-synchrone,
- réguler les oscillations au moyen d'un noyau de régulation (84),
- effectuer une transformation inverse de coordonnées propre (88) pour générer des signaux de réglage, et
- combiner (89) lesdits signaux de réglage avec des signaux de sortie du premier canal de régulation (7) pour la commande commune du convertisseur (5).

12. Procédé selon la revendication 11, **caractérisé en ce qu'**une éolienne selon l'une des revendications 1 à 10 est utilisée.
